# EUROPEAN PATENT SPECIFICATION

(11) **EP 1 500 863 B1**
(45) Date of publication and mention of the grant of the patent: **08.10.2008**
(21) Application number: 04017416.1
(22) Date of filing: 22.07.2004
(51) Int. Cl.: F16N 13/00, F04D 17/12, F01M 1/02, F04D 15/00, F04D 5/00

(54) **Pump**
Pumpe
Pompe

(30) Priority: 25.07.2003 GB 0317388
(43) Date of publication of application: 26.01.2005
(73) Proprietor: Pierburg Pump Technology UK Limited, Coventry West Midlands CV3 4FG (GB)
(72) Inventor: Williams, David John, Hatton Park, Warwick CV35 7TZ (GB); Coope, Neal, Burntwood, Staffordshire WS7 2ES (GB)
(74) Representative: Lucking, David John

(56) References cited:
- DE-A1- 19 914 440
- GB-A- 794 539
- GB-A- 2 146 072
- SU-A1- 1 795 685
- US-A- 5 470 197

## Description

The present invention relates to a pump, particularly, but not exclusively for use in pumping lubricant such as oil into an engine.

Pumps in which pumping is effected by means of a plurality of generally parallel discs or annular plates which rotate together in the fluid to be pumped about an axis generally normal to the plates are known, and are generally referred to as disc pumps. When a fluid enters the pump, layers of fluid adhere to the surfaces of the discs, forming so-called boundary layers that remain stationary relative to the rotating discs. As the discs rotate, the effects of boundary-layer adhesion and viscous drag cause fluid between the discs to be pulled around the pump with the discs. Energy is transferred to successive layers of fluid molecules through viscous drag, and laminar flow streams are set up in the fluid between adjacent discs, the speed of movement of the fluid relative to the discs being fastest at a plane centrally between the discs and decreasing towards the disc surfaces.

Since operation of a disc pump relies on the viscosity of the pumped fluid, disc pumps may advantageously be used to pump relatively viscous fluids, which can be difficult to pump efficiently using other types of pump.

Pumping efficiency may be optimised if the disc spacing is such that as much of the fluid between adjacent discs as possible moves with approximately the same velocity as the discs, i.e. there is minimum change in velocity of the fluid between adjacent disc surfaces, since differences in velocity between adjacent fluid layers may result in frictional energy losses. Since the rate of change in fluid velocity between the disc surfaces and the plane centrally between adjacent discs decreases with increasing fluid viscosity, in order to achieve optimum pumping efficiency, a smaller disc separation is required for low viscosity fluids than for high viscosity fluids.

SU1795685 discloses a disc pump in which distance spacers may be used to set the spacing between the discs. Prior to pumping, a user may calculate the optimum disc spacing from the viscosity of the medium to be pumped, and may use the distance spacers to set the disc spacing to the desired value.

According to a first aspect of the invention, we provide a pump including a plurality of spaced apart generally mutually parallel plates, which are mounted for rotation in a housing about an axis which extends generally normal to the plates, to effect pumping of a fluid, wherein pump further includes means which in use vary the separation of the plates automatically in accordance with changes in the temperature of fluid within the housing.

Since the viscosity of a fluid depends on the temperature of the fluid, by virtue of the invention, the pumping efficiency of the pump when used to pump a fluid of variable temperature may be improved.

Preferably the means of varying the plate separation is configured to decrease the separation of the plates with increasing temperature.

Since the viscosity of a liquid decreases with increasing temperature, by virtue of the invention, the pumping efficiency of the pump when used to pump a liquid of variable temperature may be improved.

The means of varying the plate separation may include a plurality of resilient biasing elements, a resilient biasing element being located between at least two parts of adjacent plates, and an actuator part which bears on the plates and pushes the plates closer together as the temperature of the actuator part increases.

In this case, the actuator part may include a bimetallic element, or alternatively, the actuator part may include a fluid filled cylinder and piston.

According to a second aspect of the invention we provide a lubricating system for an engine, the lubricating system including a pump according to the first aspect of the invention for pumping liquid lubricant around the engine,

Since the viscosity of a liquid lubricant decreases with increasing temperature, and the temperature of the lubricant increases as the engine warms up, by virtue of the invention, the pumping efficiency of the lubricant pump may be improved.

According to a third aspect of the invention we provide a lubricating system for an engine, the lubricating system including a main pump and an auxiliary pump both for pumping liquid lubricant around the engine, the auxiliary pump including a plurality of spaced apart generally mutually parallel plates, which are mounted for rotation in a housing about an axis which extends generally normal to the plates, to effect pumping of the lubricant, wherein the auxiliary pump includes means which in use decrease the separation of the plates automatically with increasing lubricant temperature.

The auxiliary pump may thus be used before the engine is warmed up relatively efficiently to pump cold, viscous liquid lubricant, such as oil, around the engine, the efficiency of the auxiliary pump being at least maintained as the lubricant warms up by virtue of the changing plate separation, and the main pump may be used only once the lubricant has reached its optimum operating temperature, thus to pump relatively low viscosity liquid lubricant. Thus, by virtue of the invention, the main pump may be chosen to pump efficiently low viscosity warm lubricant, whilst energy losses through use of an unsuitable main pump to pump cold, viscous lubricant around the engine, may be avoided.

Preferably, the auxiliary pump is configured such that when the lubricant is relatively cold, the separation of the plates is greater than necessary to achieve optimum pumping efficiency, whereas as the temperature of the lubricant approaches an optimum operating temperature, the separation of the plates is at or around the separation necessary to achieve optimum pumping efficiency.

When the pump is operating at below optimum efficiency, energy is lost through frictional forces generated by adjacent fluid lamina moving at different velocities, and the energy thus lost is converted to heat which increases the temperature of the lubricant. Thus, whilst the lubricant is below the optimum operating temperature, the auxiliary pump acts not only to pump lubricant around the engine, but also may assist in heating the lubricant, so that the lubricant reaches its optimum operating temperature more rapidly.

Alternatively, the auxiliary pump may be configured such that the plate separation is as close to the plate separation necessary for optimum pumping efficiency over a range of lubricant temperatures.

According to a fourth aspect of the invention, we provide a method of operating a lubricating system for an engine, the lubricating system including a main pump and an auxiliary pump both for pumping liquid lubricant around the engine, the auxiliary pump including a plurality of spaced apart generally mutually parallel plates, which are mounted for rotation in a housing about an axis which extends generally normal to the plates, to effect pumping of the lubricant, wherein the auxiliary pump includes means which in use decrease the separation of the plates automatically with increasing lubricant temperature, the method including the steps of operating the auxiliary pump to pump lubricant around the engine prior to engine start up, operating the main pump during normal engine operation, and ceasing operation of the auxiliary pump after the engine has reached a predetermined operating temperature.

Operation of the auxiliary pump prior to engine start up ensures that there is lubricant present in the engine when the engine starts, and thus reduces wear of the engine.

The method may further include the steps of ceasing operation of the main pump and recommencing use of the auxiliary pump on engine shut down.

An embodiment of the invention will now be described, by way of example only, with reference to the accompanying drawings of which,
Figure 1 is an illustration of a pump according to the first aspect of the invention , and
Figure 2 is an illustration of part of the disc pack of the pump of Figure 1.
Figure 3 is an illustration of part of the disc pack of an alternative embodiment of pump according to the first aspect of the invention.
Figure 4 is an illustration of a connector for use in a further alternative embodiment of pump according to the first aspect of the invention.
Figure 5 is an schematic illustration of a lubrication system for an engine according to the second aspect of the invention.

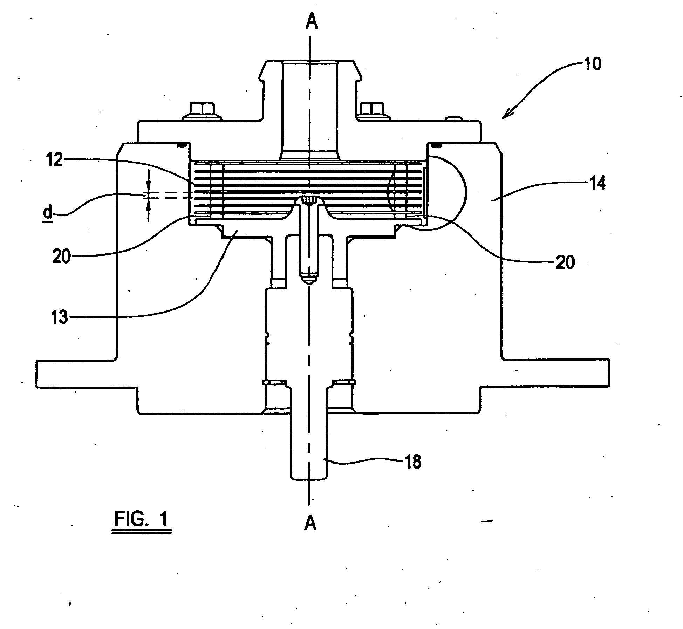

Referring now to Figure 1, there is shown a pump 10 including a plurality of spaced apart generally mutually parallel plates 12, which in this example are generally circular discs. The discs 12 are supported on a base plate 13, and mounted for rotation in a housing 14 about an axis A which extends generally normal to the discs 12, to effect pumping of a fluid within the housing 14, from an inlet to an outlet provided in the housing 14. Rotation of the discs 12 is achieved by the operation of a driving means (not shown), in this case an electric motor, which is connected to the base plate 13 by means of a drive shaft 18.

Pumping of fluid within the housing 14 is achieved as follows. When a fluid enters the housing 14 via the inlet, a layer of fluid adheres to the surfaces of the discs 12, forming a so-called boundary layer that remains stationary relative to the rotating discs 12. As the discs 12 rotate about axis A, the effects of boundary-layer adhesion and viscous drag cause fluid between the discs 12 to be pulled around the housing 14 with the discs 12. Energy is transferred to successive layers of fluid molecules through viscous drag, and laminar flow streams are set up in the fluid between adjacent discs 12, the speed of movement of the fluid relative to the discs 12 being fastest at a plane centrally between the discs 12 and decreasing towards the disc surfaces. As a result, combined centrifugal and tangential forces are imparted to the fluid, and the fluid is pumped out of the housing 14 via the outlet.

In this example, the pump 10 is used as a lubricant pump for pumping a liquid lubricant such as oil to and around an automotive engine. It is particularly advantageous to use such a pump in this application for two reasons. First, since there is minimum impingement of the fluid molecules on the discs 12, other than when the initial boundary layers are established, such pumps are relatively quiet. Moreover, since operation of the pump depends on viscous drag, disc pumps are particularly effective for pumping relatively viscous fluids, such as cold lubricating oil.

The discs 12 of pump 10 are connected together by means of three connectors 20, which are spaced at generally regular intervals around the circumferences of the discs 12. It will be appreciated, however, that fewer or more than three connectors 20 may be provided.

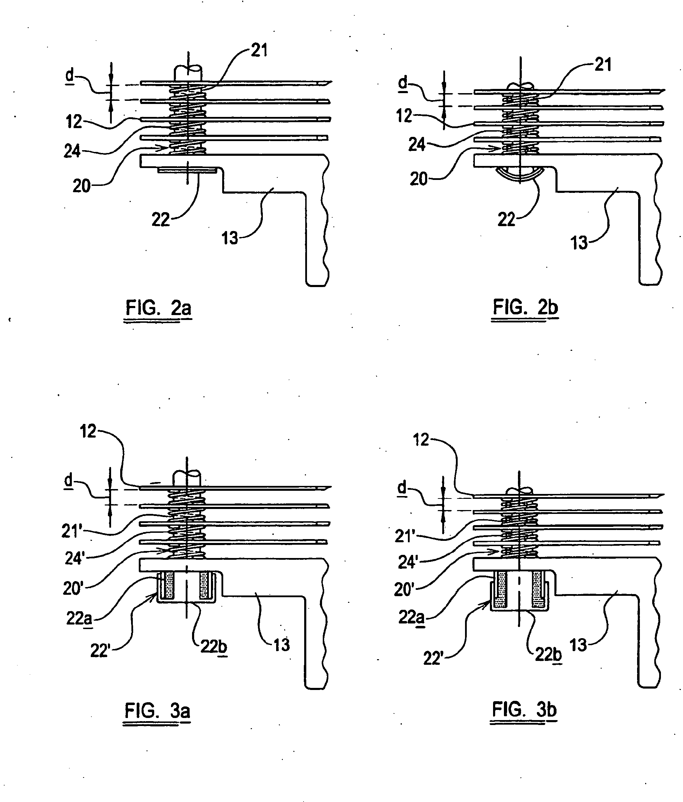

A first embodiment of connector 20 is illustrated in Figure 2a and 2b, and comprises a generally cylindrical rod 21 which extends through a series of apertures in the discs 12 and the base plate 13, so that movement of the discs axially of the rod 21 is permitted. A longitudinal axis of the rod 21 extends generally normal to the discs 12.

The connector 20 further comprises first 22 and second stops by means of which the discs 12 are retained on the base plate 13, the stops 22 being mounted at either end of the rod 2L with the discs 12 and base plate 13 therebetween. A resilient biasing element 24, in this example a helical compression spring, is located in the space between the base plate 13 and the adjacent disc 12 and in each of the spaces between adjacent discs 12. At least one of the stops, in the example the first stop 22, is an actuator part which bears on the discs 12 and pushes the discs 12 closer together against the biasing force of the resilient biasing elements 24 as the temperature of the stop increases.

In this embodiment of the invention, the first stop 22, which is located adjacent to the base plate 13 is a bimetallic plate, the centre of which is connected to the rod 21 such that the major surfaces of the plate extends generally normal to the longitudinal axis of the rod and generally parallel to the discs 12. The plate is made from two metals or alloys with significantly different coefficients of thermal expansion, the interface between the two extends generally centrally between and parallel to the major surfaces of the plate. The difference between the coefficients of thermal expansion between the two metals/alloys making up the plate causes the plate to bend when the temperature of the plate changes.

Whilst the second stop may also be of the same bimetallic construction as the first 22, in this example it is of conventional construction, and does not change shape with changes in temperature.

At ambient temperatures, the stop 22 is arranged such that the plate is generally flat and flush against the base plate 13, as illustrated in Figure 2a. The resilient biasing elements 24 push the discs 12 apart so that the disc spacing d is at a maximum.

The metal/alloy with the lowest coefficient of thermal expansion is located adjacent the base plate 13, and thus as the temperature of the stop 22 increases, the plate bends with its edges turning towards the base plate 13, as illustrated in Figure 2b. The force exerted on the discs 12 as the plate bends overcomes the biasing forces of the spring elements 24 and pushes the discs 12 together to reduce the disc spacing d.

As the stop 22 is immersed in pumped fluid, the temperature of the stop 22 increases as the temperature of the pumped fluid increases, and thus the connector 20 ensures that the disc spacing d decreases with increasing temperature.

An alternative embodiment of connector 20' is illustrated in Figure 3a and 3b. This connector 20' is similar to that illustrated in Figure 2 in that it includes a rod 21', first 22' and second stops, and a plurality of resilient biasing elements 24' arranged between adjacent discs 12. The construction of the first stop 22' is entirely different, however, the first stop 22' comprising a fluid filled piston 22a and cylinder 22b arrangement. As the temperature of the fluid increases, the fluid expands and pushes the piston 22a outwardly of the cylinder 22b, which in turn pushes the discs 12 together to reduce the disc spacing d. The configuration of the stop 22' at ambient temperatures is illustrated in Figure 3a, and at elevated temperatures in Figure 3b.

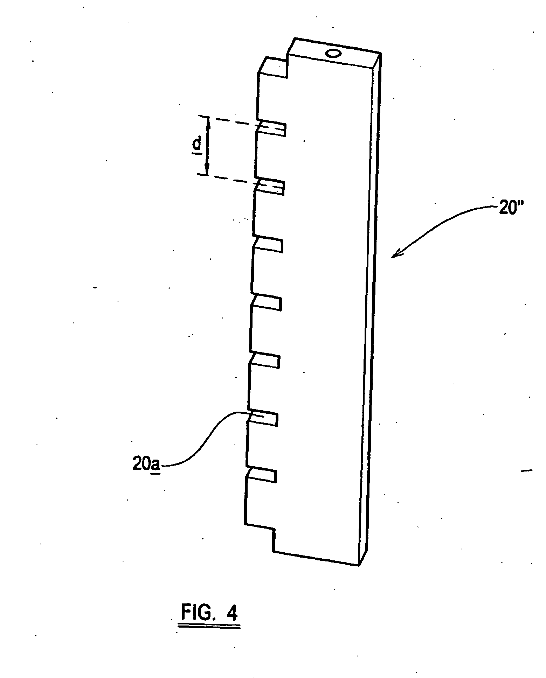

A further alternative embodiment of the connector 20" is illustrated in Figure 4. This embodiment of connector 20" is generally elongate and includes a plurality of slots 20a which extend into a longitudinal edge of the connector 20, generally normal to a longitudinal axis of the connector 20, and which are spaced at generally regular intervals (with a separation d) along the longitudinal edge of the connector 20.

Corresponding slots are provided in the circumferences of the discs 12, and the slots in the discs 12 are interlocked with the slots in each connector 20, such that the opposite longitudinal edge of the connector 20 to that including the slots 20a lies adjacent the circumference of discs 12. Each connector 20 is retained on the discs 12 by means of an interference fit.

A portion of each connector 20 between adjacent slots 20a thus acts as a spacer which defines the disc separation d. The connectors 20 are adapted such that the disc separation d varies according to the temperature of fluid within the housing 14. For example, each connector 20 may include a element made from a shape memory alloy, such as Nitinol (™), which is adapted to alter the length of the connector 20 according to its temperature.

It should be appreciated that, whilst the above embodiments rely on changes in shape or volume of a material with temperature to effect the required change in disc spacing d, this may be achieved using mechanical means such as a geared mechanism driven by a motor or other electric actuator in response to a reading from a temperature sensor.

The disc separation d is typically between 1mm and 3.25mm, when the pump 10 is used to pump 10w40 automotive specification oil.

The pumping efficiency the pump 10 may be optimised if the disc separation d is such that as much of the fluid between adjacent discs 12 as possible moves with approximately the same velocity as the discs 12, i.e. there is minimum change in velocity of the fluid between adjacent disc surfaces, since differences in velocity between adjacent fluid layers may result in frictional energy losses. Since the rate of change in fluid velocity between the disc surfaces and the plane centrally between adjacent discs 12 decreases with increasing fluid viscosity, in order to achieve optimum pumping efficiency, a smaller disc separation d is required for low viscosity fluids than for high viscosity fluids.

The viscosity of a liquid such as lubricating oil decreases with increasing temperature, and as the temperature of the oil increases as the engine warms up, if the disc separation d were maintained at a constant value, the pumping efficiency of the pump 10 would vary as the engine warms up. For example, if the disc separation d were selected such that it is optimum for pumping high viscosity cold oil, the disc separation d would be too high for achieving optimum pumping efficiency when pumping low viscosity warmer oil, and the pumping efficiency would decrease as the engine warms up.

Thus, in one embodiment of the invention, the configuration of the connectors 20, and their change with temperature, are selected such that the disc separation d between each adjacent pair of discs 12, is such that it provides optimum or as close to optimum pumping efficiency as possible over generally the entire lubricant temperature range. Thus, the efficiency of the lubricant pump may be improved.

The configuration of the connectors 20, and their change with temperature, may alternatively, be selected such that when the temperature of the lubricant is low, e.g. on engine start up, the disc separation d is greater than that required to achieve optimum pumping efficiency, the disc separation d decreasing to approach the value required for optimum pumping efficiency as the temperature of the lubricant approaches its optimum operating temperature.

When the pump 10 is operating at less than optimum efficiency, energy is lost through frictional forces generated by adjacent liquid lamina moving at different velocities, and the energy lost is converted to heat which increases the temperature of the oil. Thus, whilst the oil is below the optimum operating temperature, the pump 10 acts not only to pump oil around the engine, but also to assist in heating the oil, so that the oil reaches its optimum operating temperature more rapidly. This can assist in reducing wear on the engine, and can improve the overall efficiency of the engine, which in turn may reduce fuel consumption.

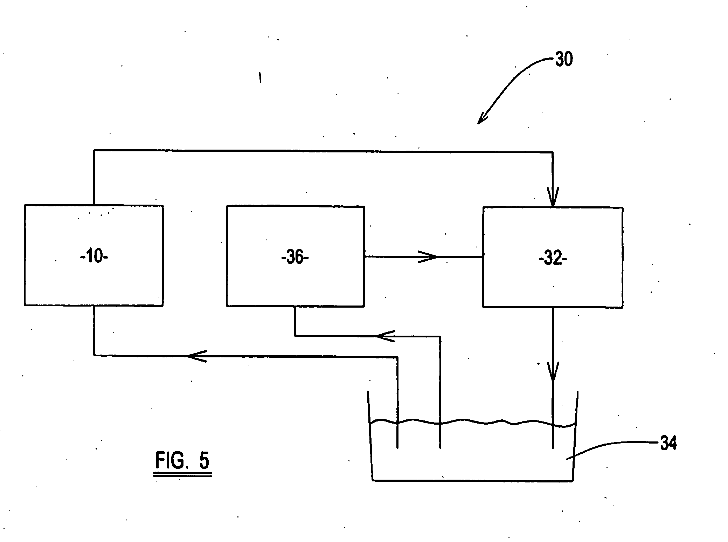

As illustrated in Figure 5, the pump 10 may be incorporated in a lubricating system 30 for an engine 32 which includes a main pump 36 and an auxiliary pump 10 both for pumping liquid lubricant such as oil from a lubricant reservoir 34 around the engine 32, the main pump 36 being a conventional lubricant pump such as a gear pump, and the auxiliary pump being a pump 10 as described above.

In this case, the auxiliary pump 10 may be used before the engine 32 is warmed up to "pre-prime" the engine 32, i.e. to pump cold, viscous oil around the engine 32 before the engine 32 is started. For example, where the engine 32 is used to drive a vehicle, operation of the auxiliary pump 10 may be initiated upon opening of a driver's door of the vehicle. This ensures that the engine 32 is at least partially lubricated when it is started, and thus may reduce engine wear. The auxiliary pump 10 may be switched off once the engine 32 is up to its normal operating temperature, at which point the main pump 36 acts as the sole means for pumping lubricant around the engine 32. Thus, an appropriate type of pump for efficient pumping of warm lubricant may be selected for the main pump 36, and by use of an auxiliary pump 10 which is particularly suitable for pumping high viscosity fluid, energy losses through use of an unsuitable main pump 36 for pumping cold, viscous oil around the engine may be avoided.

The auxiliary pump 10 may also be operated for a period of time after engine shut down to assist in cooling of the engine 32 by continuing to pump oil around the engine 32.

Preferably the main pump 36 is driven directly from the engine 32, and thus only operates during engine operation, and the auxiliary pump 10 is driven independently of operation of the engine. Whilst the auxiliary pump 10 is preferably driven exclusively by means of an electric motor which may be electronically controlled, it may alternatively be driven mechanically during engine operation by means of a belt drive from the engine cam shaft. In the latter case, in order to facilitate operation of the auxiliary pump 10 before and after engine operation, an energy storage device may be provided which takes and stores energy from the engine 32 during its operation, and the energy stored in the energy storage device used to drive the pump 10 when the engine 32 is not operating. As soon as operation of the engine 32 commences, operation of the pump 10 may be switched to the belt drive from the engine cam shaft. The energy storage device may be a mechanical storage device such as a coil spring which can be used directly to drive the pump 10. Such a mechanical storage device could operate as follows.

When the engine is operating, sufficient power may be diverted from the engine to coil the spring to a maximum extent, the coiled spring thus acting to store energy from the engine. When the engine 32 is switched off, the spring may then uncoil, releasing energy which is used to drive the auxiliary pump 10. A retarder is applied to the spring, the retarder ensuring that the spring does not uncoil completely, and thus the remaining energy storing in the spring may be used to drive the auxiliary pump 10 prior to engine operation.

## Claims

1. A pump (10) including a plurality of spaced apart generally mutually parallel plates (12), which are mounted for rotation in a housing (14) about an axis which extends generally normal to the plates (12) to effect pumping of a fluid, **characterised in that** the pump further includes means which in use vary the separation of the plates (12) automatically in accordance with changes in the temperature of fluid within the housing (14).

2. A pump (10) according to claim 1 wherein the means of varying the separation of the plates (12) is configured to decrease the separation of the plates with increasing temperature.

3. A pump (10) according to claim 2 wherein the means to vary the plate separation includes a plurality of resilient biasing elements (24), a resilient biasing element (24) being located between at least two pairs of adjacent plates (12), and an actuator part (22) which bears on the plates (12) and pushes the plates (12) closer together against the biasing force of the resilient biasing element (24) as the temperature of the actuator part (22) increases.

4. A pump (10) according to claim 3 wherein the actuator part (22) includes a bimetallic element.

5. A pump (10) according to claim 3 wherein the actuator part (22) includes a fluid filled cylinder (22b) and piston (22a).

6. A lubricating system (30) for an engine (32), the lubricating system (30) including a pump (10) according to claim 1 for pumping liquid lubricant around the engine (32).

7. A lubricating system (30) for an engine (32), the lubricating system including a main pump (36) and an auxiliary pump (10) both for pumping liquid lubricant around the engine (32), the auxiliary pump (10) being a pump according to claim 1.

8. A lubricating system (30) according to claim 7 wherein the auxiliary pump (10) is configured such that when the lubricant is relatively cold, the separation (d) of the plates (12) is greater than necessary to achieve optimum pumping efficiency, whereas as the temperature of the lubricant approaches an optimum operating temperature, the separation (d) of the plates (12) is at or around the separation necessary to achieve optimum pumping efficiency.

9. A lubricating system (30) according to claim 7 wherein the auxiliary pump (10) is configured adapted such that the plate separation (d) is as close to the plate separation (d) necessary for optimum pumping efficiency over a range of lubricant temperatures.

10. A method of operating a lubricating system (30) for an engine (32), the lubricating system including a main pump (36) and an auxiliary pump (10) both for pumping liquid lubricant around the engine (32), the auxiliary pump (10) including a plurality of spaced apart generally mutually parallel plates (12), which are mounted for rotation in a housing (14) about an axis which extends generally normal to the plates (12), to effect pumping of the lubricant, wherein the auxiliary pump (10) includes means which in use decrease the separation (d) of the plates (12) automatically with increasing lubricant temperature, the method including the steps of operating the auxiliary pump (10) to pump lubricant around the engine (30) prior to engine start up, operating the main pump (36) during normal engine operation, and ceasing operation of the auxiliary pump (10) after the engine has reached a predetermined operating temperature.

11. A method of operating a lubrication system (30) according to claim 10 wherein the method further includes the steps of ceasing operation of the main pump (36) and recommencing operation of the auxiliary pump (10) on engine shut down.

## Patentansprüche

1. Pumpe (10) mit einer Anzahl voneinander beabstandeter, im Wesentlichen zueinander paralleler Platten (12), die zur Drehung in einem Gehäuse (14) um eine Achse angeordnet sind, die sich im Wesentlichen senkrecht zu den Platten (12) erstreckt, um ein Pumpen eines Fluids zu bewirken, **dadurch gekennzeichnet, dass** die Pumpe ferner Mittel aufweist, die bei Benutzung den Abstand bzw. die Trennung der Platten (12) automatisch in Übereinstimmung mit Änderungen der Temperatur des Fluids in dem Gehäuse (14) verändern.

2. Pumpe (10) nach Anspruch 1, bei der die Mittel zum Verändern des Abstandes der Platten (12) dafür eingerichtet sind, den Abstand der Platten mit zunehmenden Temperatur zu verringern.

3. Pumpe (10) nach Anspruch 2, bei der die Mittel zum Verändern des Abstands der Platten eine Anzahl federnder Vorspannungselemente (24), wobei ein federndes Vorspannungselement zwischen wenigstens zwei Paaren nebeneinander liegender Platten (12) angeordnet ist, und ein Aktorbestandteil (22), das auf den Platten (12) aufliegt und die Platten (12) dichter zueinander gegen die Vorspannungskraft der federnden Vorspannungselemente zusammendrückt, wenn die Temperatur des Aktorbestandteils (22) zunimmt, aufweisen.

4. Pumpe (10) nach Anspruch 3, bei der der Aktorbestandteil (22) ein Bimetallelement aufweist.

5. Pumpe (10) nach Anspruch 3, bei der der Aktorbestandteil (22) einen fluidgefüllten Zylinder (22b) und einen Kolben (22a) aufweist.

6. Schmiersystem (30) für einen Motor (32), wobei das Schmiersystem (30) eine Pumpe (10) nach Anspruch 1 zum Pumpen flüssigen Schmiermittels durch den Motor bzw. um den Motor (32) herum aufweist.

7. Schmiersystem (30) für einen Motor (32), wobei das Schmiersystem eine Hauptpumpe (36) und eine Hilfspumpe (10), beide zum Pumpen flüssigen Schmiermittels durch den Motor (32), aufweist, wobei die Hilfspumpe (10) eine Pumpe nach Anspruch 1 ist.

8. Schmiersystem (30) nach Anspruch 7, bei dem die Hilfspumpe (10) dafür eingerichtet ist, dass, wenn das Schmiermittel relativ kalt ist, der Abstand (d) der Platten (12) größer als erforderlich ist, um eine optimale Pumpeffizienz zu erzielen, wohingegen, wenn die Temperatur des Schmiermittels eine optimale Betriebstemperatur erreicht, der Abstand (d) der Platten (12) bei oder um den Abstand liegt, der erforderlich ist, um eine optimale Pumpeffizienz zu erzielen.

9. Schmiersystem (30) nach Anspruch 7, bei dem die Hilfspumpe (10) dazu eingerichtet angepasst ist, dass der Plattenabstand (d) so nahe wie möglich dem Plattenabstand (d) ist, der für eine optimale Pumpeffizienz über einen Bereich von Schmiermitteltemperaturen erforderlich ist.

10. Verfahren zum Betreiben eines Schmiersystems (30) für einen Motor (32), wobei das Schmiersystem eine Hauptpumpe (36) und eine Hilfspumpe (10), beide zum Pumpen von flüssigem Schmiermittel durch den Motor (32), aufweiset, wobei die Hilfspumpe (10) eine Anzahl voneinander beabstandeter, im Wesentlichen zueinander paralleler Platten (12) aufweist, die zur Drehung in einem Gehäuse (14) um eine Achse, die sich im Wesentlichen senkrecht zu den Platten (12) erstreckt, angebracht sind, um das Pumpen des Schmiermittels zu bewirken, wobei die Hilfspumpe (10) Mittel aufweist, die bei Benutzung den Abstand (d) der Platten (12) automatisch mit zunehmender Schmiermitteltemperatur verringern, wobei das Verfahren die Schritte des Betreibens der Hilfspumpe (10) zum Pumpen von Schmiermittel durch den Motor (30) vor dem Starten des Motors, das Betreiben der Hauptpumpe (36) während dem normalen Betrieb des Motors und das Einstellen des Betriebs der Hilfspumpe (10), nachdem der Motor eine vorbestimmte Betriebstemperatur erreicht hat, umfasst.

11. Verfahren zum Betreiben eines Schmiersystems (30) nach Anspruch 10, wobei das Verfahren ferner die Schritte des Einstellen des Betriebs der Hauptpumpe (36) und die Wiederaufnahme des Betriebs der Hilfspumpe nach dem Abschalter des Motors umfasst.

## Revendications

1. Pompe (10) comprenant une pluralité de plaques (12) espacées généralement parallèles les unes aux autres, qui sont montées dans un carter (14) de manière à tourner autour d'un axe qui s'étend généralement perpendiculairement aux plaques (12) pour effectuer le pompage d'un fluide, **caractérisée en ce que** la pompe comprend en outre des moyens qui, en fonctionnement, font varier automatiquement l'écartement des plaques (12) en fonction des changements de température du fluide à l'intérieur du carter (14).

2. Pompe (10) selon la revendication 1, dans laquelle le moyen faisant varier l'écartement des plaques (12) est configuré pour réduire l'écartement des plaques lorsque la température augmente.

3. Pompe (10) selon la revendication 2, dans laquelle le moyen faisant varier l'écartement des plaques comprend une pluralité d'éléments de polarisation résilients (24), un élément de polarisation résilient (24) étant disposé entre au moins deux paires de plaques (12) adjacentes, et une pièce d'actionnement (22) qui porte sur les plaques (12) et pousse les plaques (12) en les rapprochant à l'encontre de la force de polarisation de l'élément de polarisation résilient (24) lorsque la température de la pièces d'actionnement (22) augmente.

4. Pompe (10) selon la revendication 3, dans laquelle la pièce d'actionnement (22) comprend un élément bimétallique.

5. Pompe (10) selon la revendication (3), dans laquelle la pièce d'actionnement (22) comprend un cylindre (22b) rempli d'un fluide et un piston (22a).

6. Système de lubrification (30) destiné à un moteur (32), le système de lubrification (30) comprenant une pompe (10) selon la revendication 1 servant à pomper du lubrifiant liquide autour du moteur (32).

7. Système de lubrification (30) destiné à un moteur (32), le système de lubrification comprenant une pompe principale (36) et une pompe auxiliaire (10) servant toutes deux à pomper du lubrifiant liquide autour du moteur (32), la pompe auxiliaire (10) étant une pompe selon la revendication 1.

8. Système de lubrification (30) selon la revendication 7, dans lequel la pompe auxiliaire (10) est configurée de telle manière que lorsque le lubrifiant est relativement froid, l'écartement (d) des plaques (12) est plus grand que nécessaire pour atteindre un rendement optimal du pompage, tandis que lorsque la température du lubrifiant approche d'une température de fonctionnement optimale, l'écartement (d) des plaques (12) est égal ou à peu près égal à l'écartement nécessaire pour atteindre le rendement optimal du pompage.

9. Système de lubrification (30) selon la revendication 7, dans lequel la pompe auxiliaire (10) est configurée pour être adaptée de telle manière que l'écartement (d) des plaques est aussi proche de l'écartement (d) des plaques que nécessaire pour un rendement optimal du pompage sur une plage de température du lubrifiant.

10. Procédé de fonctionnement d'un système de lubrification (30) destiné à un moteur (32), le système de lubrification comprenant une pompe principale (36) et une pompe auxiliaire (10) servant toutes deux à pomper le lubrifiant liquide autour du moteur (32), la pompe auxiliaire (10) comprenant une pluralité de plaques (12) espacées généralement parallèles les unes aux autres, qui sont montées dans un carter (14) pour tourner autour d'un axe qui s'étend généralement perpendiculairement aux plaques (12) pour effectuer le pompage du lubrifiant, procède dans lequel la pompe auxiliaire (10) comprend des moyens qui, en fonctionnement, réduisent automatiquement l'écartement (d) des plaques (12) lorsque la température du lubrifiant augmente, 1 le procédé comprenant les étapes qui consistent à faire fonctionner la pompe auxiliaire (10) pour pomper le lubrifiant autour du moteur (32) avant le démarrage du moteur, faire fonctionner la pompe principale (36) pendant le fonctionnement normal du moteur, et arrêter le fonctionnement de la pompe auxiliaire (10) une fois que le moteur a atteint une température de fonctionnement prédéterminée.

11. Procédé de fonctionnement d'un système de lubrification (30) selon la revendication 10, le procédé comprenant en outre les étapes qui consistent à arrêter le fonctionnement de la pompe principale (36) et à reprendre remettre en fonctionnement la pompe auxiliaire (10) à l'arrêt du moteur.
